(19) Europäisches Patentamt
European Patent Office
Office européen des brevets

(11) **EP 4 261 953 B1**

(12) **EUROPEAN PATENT SPECIFICATION**

(45) Date of publication and mention
of the grant of the patent:
**26.03.2025 Bulletin 2025/13**

(21) Application number: **22745645.6**

(22) Date of filing: **18.01.2022**

(51) International Patent Classification (IPC):
$H01M\ 4/587^{(2010.01)}$    $H01G\ 11/42^{(2013.01)}$
$H01M\ 4/133^{(2010.01)}$    $H01M\ 4/62^{(2006.01)}$
$H01M\ 4/36^{(2006.01)}$    $H01G\ 11/24^{(2013.01)}$
$H01G\ 11/06^{(2013.01)}$    $H01G\ 11/32^{(2013.01)}$
$H01G\ 11/38^{(2013.01)}$    $H01G\ 11/40^{(2013.01)}$
$H01G\ 11/50^{(2013.01)}$    $H01M\ 4/583^{(2010.01)}$
$H01M\ 4/02^{(2006.01)}$    $H01M\ 10/0525^{(2010.01)}$

(52) Cooperative Patent Classification (CPC):
**H01G 11/50; H01G 11/24; H01G 11/32;
H01G 11/40; H01M 4/133; H01M 4/364;
H01M 4/366; H01M 4/583; H01M 4/587;
H01M 4/62; H01M 4/625; H01M 10/0525;**
H01G 11/06; H01G 11/38; H01M 2004/021;   (Cont.)

(86) International application number:
**PCT/JP2022/001504**

(87) International publication number:
**WO 2022/163422 (04.08.2022 Gazette 2022/31)**

(54) **ENERGY STORAGE DEVICE AND NEGATIVE ELECTRODE FOR ENERGY STORAGE DEVICE**

ENERGIESPEICHERELEMENT UND NEGATIVE ELEKTRODE FÜR
ENERGIESPEICHERELEMENTE

ÉLÉMENT DE STOCKAGE D'ÉNERGIE ET ÉLECTRODE NÉGATIVE POUR ÉLÉMENTS DE
STOCKAGE D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2021 JP 2021010705**

(43) Date of publication of application:
**18.10.2023 Bulletin 2023/42**

(73) Proprietor: **GS Yuasa International Ltd.
Kisshoin, Minami-ku,
Kyoto-shi, Kyoto 601-8520 (JP)**

(72) Inventors:
• **OGI, Kenta
Kyoto-shi, Kyoto 601-8520 (JP)**

• **KUMABAYASHI, Kei
Kyoto-shi, Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
EP-A1- 3 719 883    WO-A1-2012/067102
WO-A1-2015/152113    WO-A1-2020/213628
JP-A- 2004 146 292    JP-A- 2018 014 319
US-A1- 2017 133 682    US-A1- 2018 190 985
US-A1- 2020 127 289    US-A1- 2021 075 016

**(Cont. next page)**

(52) Cooperative Patent Classification (CPC): (Cont.)
H01M 2004/027; Y02E 60/10

**Description**

TECHNICAL FIELD

The present invention relates to an energy storage device and a negative electrode for an energy storage device.

BACKGROUND ART

Nonaqueous electrolyte secondary batteries typified by lithium ion nonaqueous electrolyte secondary batteries are widely in use for electronic equipment such as personal computers and communication terminals, automobiles, and the like because the batteries are high in energy density. The nonaqueous electrolyte secondary battery is generally provided with an electrode assembly with a pair of electrodes electrically isolated by a separator, and a nonaqueous electrolyte interposed between the electrodes and is configured to be charged and discharged by transferring ions between both the electrodes. In addition, capacitors such as lithium ion capacitors and electric double-layer capacitors are also widely in use as energy storage devices except for the nonaqueous electrolyte secondary batteries.

For the purpose such as increasing the energy density of such an energy storage device and improving the charge-discharge efficiency, a carbon material such as graphite has been used as the negative active material of the energy storage device (see Patent Document 1). Patent Document 2 discloses a negative electrode active material including artificial graphite having a large particle diameter and natural graphite having a small particle diameter, wherein the average particle diameter ratio of the small particle and the large particle is 1:1.5-1:5. Patent Document 3 describes a negative electrode active material for a lithium secondary battery which includes first negative electrode active material particles including artificial graphite particles and a carbon coating layer formed on the artificial graphite particle; and second negative electrode active material particles including natural graphite particles. Patent Document 4 refers to a negative electrode active material including spherical artificial graphite and natural flake graphite, wherein the spherical artificial graphite and the natural flake graphite are included in a weight ratio of 80:20 to 95:5. Patent Document 5 discloses a negative electrode active material for a lithium secondary battery, which includes (A) first artificial graphite having an average particle diameter (D50) of 15 $\mu$m to 20 $\mu$m and (B) second artificial graphite having an average particle diameter (D50) of 3 $\mu$m to 5 $\mu$m.

PRIOR ART DOCUMENT

PATENT DOCUMENT

Patent Document 1: WO 2017/221895 A
Patent Document 2: US 2020/127289 A1
Patent Document 3: EP 3 719 883 A1
Patent Document 4: US 2017/133682 A1
Patent Document 5: US 2018/190985 A1

SUMMARY OF THE INVENTION

PROBLEMS TO BE SOLVED BY THE INVENTION

According to findings by the present inventors, among carbon materials, solid graphite has no voids in the particles thereof, and thus tends to have lower input/output performance than hollow graphite. In contrast, solid graphite has in relatively small in number of reaction active sites, and is excellent in durability. In order to improve the input/output performance of the solid graphite, it is effective to reduce the particle size, but when the particle size of the solid graphite is reduced, there is a possibility that the discharge capacity may be decreased. For this reason, the present inventors have studied the use of solid graphite and hollow graphite that are small in particle size in mixture as a negative active material. When a plate obtained by using a negative active material that has a mixture of solid graphite and hollow graphite that are small in particle size is subjected to press working, however, the phenomenon of degrading charge-discharge cycle performance is observed in some cases.

The present invention has been made in view of the circumstances mentioned above, and a main object of the present invention is to provide an energy storage device that is excellent in charge-discharge cycle performance and power performance.

MEANS FOR SOLVING THE PROBLEMS

An energy storage device according to an aspect of the present invention includes a negative electrode including a negative substrate and a negative active material layer layered directly or indirectly on at least one surface of the negative substrate, the negative active material layer contains: solid graphite particles that have a median diameter D1; hollow graphite particles that have a larger median diameter D2 than the solid graphite particles; and a conductive agent, and the conductive agent is fibrous carbon.

ADVANTAGES OF THE INVENTION

The energy storage device according to an aspect of the present invention is excellent in charge-discharge cycle performance and power performance.

BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of energy storage devices.

MODE FOR CARRYING OUT THE INVENTION

First, outlines of an energy storage device and a negative electrode for an energy storage device, disclosed in the present specification, will be described.

An energy storage device according to an aspect of the present invention includes a negative electrode including a negative substrate and a negative active material layer layered directly or indirectly on at least one surface of the negative substrate, the negative active material layer contains: solid graphite particles that have a median diameter D1; hollow graphite particles that have a larger median diameter D2 than the solid graphite particles; and a conductive agent, and the conductive agent is fibrous carbon.

The energy storage device is excellent in charge-discharge cycle performance and power performance, with the negative active material layer containing the solid graphite particles that have the median diameter D1, the hollow graphite particles that have the median diameter D2 larger than the solid graphite particles, and the fibrous carbon as a conductive agent. The reason for this is unknown but is considered as follows. The negative electrode included in the energy storage device includes the solid graphite particles with a smaller median diameter and the hollow graphite particles that are larger in median diameter than the solid graphite particles, thereby reducing the resistance difference between the hollow graphite particles and the solid graphite particles. As a result, the current distribution during charge-discharge in the energy storage device is reduced, thereby reducing the difference in progressive deterioration between the hollow graphite particles with a larger median diameter and the solid graphite particles with a smaller median diameter. In addition, the negative electrode included in the energy storage device contains the fibrous carbon as a conductive agent, thereby exhibiting favorable electron conductivity from coupling of the solid graphite particles with a smaller median diameter, the hollow graphite particles with a larger median diameter, and the fibrous carbon, and maintaining the favorable electron conductivity over a long period of time even after charge-discharge cycles. These are believed to contribute to improvements in charge-discharge cycle performance and power performance.

In a preferred aspect of the energy storage device disclosed herein, the relationship between the median diameter D1 of the solid graphite particles and the median diameter D2 of the hollow graphite particles satisfies $1 < (D2/D1) \leq 10$. The solid graphite particles and the hollow graphite particles are used in combination so as to have the specific median diameter ratio mentioned above, thereby allowing an energy storage device that is more excellent in charge-discharge cycle performance and power performance to be obtained.

In a preferred aspect of the energy storage device disclosed herein, the median diameter D1 of the solid graphite particles is 1 $\mu$m or more and less than 5 $\mu$m. In addition, the median diameter D2 of the hollow graphite particles is 5 $\mu$m or more and 20 $\mu$m or less. The median diameter is measured according to the method described below. The median diameter D1 of the solid graphite particles and the median diameter D2 of the hollow graphite particles respectively fall within the ranges mentioned above, thereby allowing an energy storage device that is more excellent in charge-discharge cycle performance and power performance to be suitably obtained.

In a preferred aspect of the energy storage device disclosed herein, the fibrous carbon has an average aspect ratio of 50 or more and 100 or less. By using fibrous carbon with the average aspect ratio within the range mentioned above, the effect of applying the present aspect can be more suitably exhibited.

A negative electrode for an energy storage device according to another aspect of the present invention includes a negative substrate and a negative active material layer layered directly or indirectly on at least one surface of the negative substrate, the negative active material layer contains: solid graphite particles that have a median diameter D1; hollow graphite particles that have a larger median diameter D2 than the solid graphite particles; and a conductive agent, and the conductive agent is fibrous carbon. The negative electrode includes the solid graphite particles with a smaller median diameter and the hollow graphite particles that are larger in median diameter than the solid graphite particles, thereby reducing the resistance difference between the hollow graphite particles and the solid graphite particles. As a result, the current distribution during charge-discharge in the energy storage device is reduced, thereby reducing the difference in progressive deterioration between the hollow graphite particles with a larger median diameter and the solid graphite particles with a smaller median diameter. In addition, the negative electrode contains the fibrous carbon as a conductive agent, thereby exhibiting favorable electron conductivity from coupling of the solid graphite particles with a smaller median diameter, the hollow graphite particles with a larger median diameter, and the fibrous carbon, and maintaining the favorable electron conductivity over a long period of time even after charge-discharge cycles. These are believed to contribute to improvements in the charge-discharge cycle performance and power performance of an energy storage device with the negative electrode used.

Hereinafter, a negative electrode for an energy storage device and an energy storage device according to an embodiment of the present invention, and other embodiments will be described in detail. The names of the respective constituent members (respective constituent elements) for use in the respective embodiments may be different from the names of the respective constituent members (respective elements) for use in the background art.

<Negative electrode for energy storage device>

A negative electrode for an energy storage device according to an embodiment of the present invention has a negative substrate and a negative active material layer disposed directly on at least one surface of the negative substrate, or over the surface with an intermediate layer interposed therebetween.

(Negative substrate)

The negative substrate has conductivity. Whether the positive substrate has "conductivity" or not is determined with the volume resistivity of $10^7 \, \Omega \cdot cm$ measured in accordance with JIS-H-0505 (1975) as a threshold. As the material of the negative substrate, a metal such as copper, nickel, stainless steel, or a nickel-plated steel, or an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 $\mu$m or more and 35 $\mu$m or less, more preferably 3 $\mu$m or more and 30 $\mu$m or less, still more preferably 4 $\mu$m or more and 25 $\mu$m or less, and particularly preferably 5 $\mu$m or more and 20 $\mu$m or less. When the average thickness of the negative substrate falls within the range mentioned above, the energy density per volume of the energy storage device can be increased while increasing the strength of the negative substrate.

The intermediate layer is a layer disposed between the negative substrate and the negative active material layer. The intermediate layer includes a conductive agent such as carbon particles, thereby reducing contact resistance between the negative substrate and the negative active material layer. The configuration of the intermediate layer is not particularly limited, and includes, for example, a binder and a conductive agent.

(Negative active material layer)

The negative active material layer contains solid graphite particles that have a median diameter D1, hollow graphite particles that have a larger median diameter D2 than the solid graphite particles, and a conductive agent. The negative active material layer contains optional components such as a binder, a thickener, and a filler, if necessary.

In this specification, the "graphite" is a carbon material in which the average grid spacing ($d_{002}$) of (002) plane, determined by an X-ray diffraction method before charge-discharge or in a discharged state, is less than 0.34 nm.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a half cell that has, for use as a working electrode, a negative electrode containing a carbon material as a negative active material, and has metal Li for use as a counter electrode.

In this specification, the term "solid" means that the inside of the particle is filled substantially without voids. More specifically, in the present specification being "solid" means that in a cross section of a particle observed in a SEM image acquired by a scanning electron microscope (SEM), the area ratio excluding voids in the particle with respect to the total area of the particle is 95% or more. In a preferred aspect, the area ratio of the solid graphite particles can be 97% or more (e.g. 99% or more). Being "hollow" means that in a cross section of a particle observed in a SEM image acquired by a SEM, the area ratio excluding voids in the particle is less than 95% with respect to the total area of the particle. In a preferred aspect, the area ratio of the hollow graphite particles can be 92% or less (e.g. 90% or less).

The area ratio R of the graphite particle excluding voids in the particle relative to the total area of the particle can be determined in accordance with the following procedure.

(1) Preparation of samples for measurement

The powder of the graphite particles to be measured is fixed with a thermosetting resin. A cross-section polisher is used to expose the cross section of the graphite particles fixed with resin to produce a sample for measurement. It is to be noted that the graphite particles to be measured are prepared in accordance with the following procedure. When graphite particles before assembling the energy storage device can be prepared, the graphite particles are used as they are. In the case of preparing graphite particles from the assembled energy storage device, the energy storage device is subjected to constant current discharge with a current of 0.1C until reaching an end-of-discharge voltage under normal usage, into a discharged state. The energy storage device in the discharged state is disassembled, the negative electrode is taken out, sufficiently washed with a dimethyl carbonate, and from the negative electrode subjected to reduced-pressure drying at room temperature, graphite particles are collected. The operations from the disassembly of the energy storage device to the preparation of the graphite particles to be measured are performed in a dry air atmosphere with a dew point of -40°C or lower. The term of during normal usage herein refers to a case of using the energy storage device while employing charge-discharge conditions recommended or specified for the energy storage device, and when a charger for the energy storage device is prepared, this term refers to a case of using the energy storage device with the charger applied.

(2) Acquisition of SEM image

For acquiring an SEM image, JSM-7001F (manufactured by JEOL Ltd.) is used as a scanning electron microscope. For the SEM image, a secondary electron image is observed. The acceleration voltage is 15 kV. The observation magnification is set such that the number of graphite particles appearing in one field of view is 3 or more and 15 or less. The obtained SEM image is stored as an image file. In addition, various conditions such as spot diameter, working distance, irradiation current, luminance, and focus are appropriately set so as to make the contour of the graphite particle clear.

(3) Cut-out of contour of graphite particle

The contour of the graphite particle is cut out from the acquired SEM image by using an image cutting function of an image editing software Adobe Photoshop Elements 11. The contour is cut out by using a quick selection tool to select the outside of the contour of the active material particle and edit the part excluding the graphite particle to a black background. In this regard, when the number of the graphite particles from which the contours have been able to be cut out is less than three, an SEM image is acquired again, and the cutout is performed until the number of the graphite particles from which the contours have been able to be cut out is three or more.

(4) Binarization processing

The image of the first graphite particle among the cut-out graphite particles is subjected to binarization processing with, as a threshold value, a concentration set to be 20% lower than the concentration at which the intensity reaches the maximum, with the use of image analysis software PopImaging 6.00. By the binarization processing, the area on the lower-concentration side is calculated as an "area $S_1$ excluding voids in the particles".

Then, the image of the same first graphite particle is subjected to binarization processing with a concentration 10 as a threshold value. The outer edge of the graphite particle is determined by the binarization processing, and the area inside the outer edge is calculated as an "area $S_0$ of the whole particle".

$S_1$ to $S_0$ ($S_1/S_0$) is calculated with the use of $S_1$ and $S_0$ calculated above to calculate an "area ratio $R_1$ excluding voids in the particles with respect to the area of the whole particle" in the first graphite particle.

The images of the second and subsequent graphite particles among the cut-out graphite particles are also each subjected to the binarization processing mentioned above, and the areas $S_1$ and $S_0$ are calculated. Based on the calculated areas $S_1$ and $S_0$, area ratios $R_2$, $R_3$,... of the respective graphite particles are calculated.

(5) Determination of area ratio R

The average value for all of the area ratios R1, R2, R3,... calculated by the binarization processing is calculated to determine "the area ratio R of the graphite particles excluding voids in the particles with respect to the total area of the particles".

(Median diameter)

The median diameter D2 of the hollow graphite particles is not particularly limited, as long as the median diameter D2 is larger than the median diameter D1 of the solid graphite particles (i.e. D2 > D1). D2 is, for example, 5 μm or more, typically 6 μm or more. D2 is preferably 7 μm or more, more preferably 7.5 μm or more. In some aspects, D2 may be 8 μm or more, or 10 μm or more (e.g. 12 μm or more). In addition, from the viewpoints such as increasing the power performance, hollow graphite particles with D2 of 20 μm or less can be preferably employed. For example, D2 is preferably 18 μm or less, more preferably 16 μm or less. In some aspects, D2 may be 14 μm or less, or 12 μm or less (e.g. 10 μm or less). The technique disclosed herein can be preferably carried out in an aspect in which the median diameter D2 of the hollow graphite particles is 5 μm or more and 20 μm or less (furthermore, 6 μm or more and 16 μm or less, particularly 8 μm or more and 14 μm or less).

In contrast, the median diameter D1 of the solid graphite particles is not particularly limited, as long as the median diameter D1 is smaller than D2. From the viewpoints such as increasing the power performance, solid graphite particles with D1 of less than 5 μm can be preferably employed. For example, D1 is preferably 4.5 μm or less, more preferably 4 μm or less. In some aspects, D1 may be 3.6 μm or less, or 3.4 μm or less (e.g. 3.2 μm or less). In addition, from the viewpoint of, for example, ease of handling at the time of manufacture, or manufacturing cost, D1 is typically 0.5 μm or more, preferably 1 μm or more, more preferably 1.5 μm or more, still more preferably 2 μm or more. For example, solid graphite particles with D1 of 2.5 μm or more (e.g. 2.8 μm or more) may be employed. From viewpoints such as achieving a balance between the power performance mentioned above and ease of manufacture, the solid graphite particles preferably have D1 of 0.5 μm or more and less than 8 μm, more preferably 1.5 μm or more and 5 μm or less, particularly preferably 2 μm or more and 4 μm or less.

From the viewpoint of more sufficiently exhibiting the effect of using the hollow graphite particles and the solid graphite particles in combination, the relationship between D1 and D2 preferably satisfies $1 < (D2/D1) \leq 10$. The solid graphite particles and the hollow graphite particles are used in combination so as to have the specific median diameter ratio mentioned above, thereby causing the device to be excellent in charge-discharge cycle performance and power performance to be obtained. For example, the technique disclosed herein can be preferably carried out in an aspect in which the relationship between D1 and D2 is $1.5 \leq (D2/D1) \leq 8$, more preferably $1.8 \leq (D2/D1) \leq 6$, still more preferably $2 \leq (D2/D1) \leq 5.2$, particularly preferably $2.5 \leq (D2/D1) \leq 4.8$. In some aspects, D1 and D2 may satisfy, for example, $(D2/D1) \leq 4$, typically $(D2/D1) \leq 3.5$ (e.g. $(D2/D1) \leq 3$).

The value obtained by subtracting D1 from D2 (that is, D2 - D1) is preferably 2 μm or more, more preferably 4 μm or more. In addition, the D2 - D1 is preferably 18 μm or less, more preferably 15 μm or less, still more preferably 12 μm or less. For example, the D2 - D1 may be 10 μm or less, or 6 μm or less.

In the present specification, the "median diameter" means a value (D50) at which the volume-based integrated distribution calculated in accordance with JIS-Z8819-2 (2001) becomes 50 %. Specifically, the measured value obtained by the following method can be regarded as the median diameter. A laser diffraction type particle size distribution measuring apparatus ("SALD-2200" manufactured by Shimadzu Corporation) is used as a measuring apparatus, and Wing SALD-2200 is used as measurement control software. A scattering measurement mode is employed, and a wet cell, in which a dispersion liquid with a measurement sample dispersed in a dispersion solvent circulates, is irradiated with a laser beam to obtain a scattered light distribution from the measurement sample. Then, the scattered light distribution is approximated with a log-normal distribution, and a particle size corresponding to an accumulation degree of 50% is defined as a median diameter (D50). Further, it has been confirmed that the median diameter based on the above measurement is almost equal to the median diameter measured by extracting 100 particles from the SEM image, excluding extremely large particles and extremely small particles. It is to be noted that the diameter of each particle in the measurement from the SEM image is regarded as a Feret diameter, and the volume of each particle is calculated as a sphere with the Feret diameter as a diameter.

(Type of graphite particles)

For each of the hollow graphite particle and the solid graphite particle, graphite particles that have an appropriate median diameter and shape can be appropriately selected from various known graphite particles, and used. Examples of such known graphite particles include natural graphite particles and artificial graphite particles. In this regard, the natural graphite is a generic term for graphite that can be taken from natural minerals, and the artificial graphite is a generic term for artificially produced graphite.

Specific examples of the graphite particles that can be preferably employed as the hollow graphite particles include natural graphite particles. Such natural graphite particles have high crystallinity, and can effectively contribute to the improved discharge capacity per volume of the negative active material layer of the energy storage device. Specific examples of the natural graphite particle include massive graphite (flake graphite), and earthy graphite. As the solid graphite particles, natural graphite particles that are smaller in median diameter than the hollow graphite particles may be used, or artificial graphite particles may be used. The solid graphite particles have no cavity inside, and are packed in gaps between the hollow graphite particles, and thus the solid graphite particles can contribute to an increase in the bulk density of the negative active material layer. The hollow graphite particles and the solid graphite particles may be composite particles where the graphite particles are combined with particles of another material (e.g. another carbon material or Si compound), or may be non-composite particles where the graphite particles are not combined with other particles. The hollow graphite particles and solid graphite particles disclosed herein can be preferably used in the form of non-composite particles where the graphite particles are not combined with particles of another material. The hollow graphite particles and the solid graphite particles may be graphite particles that have surfaces coated (for example, with an amorphous carbon coating).

In a preferred aspect, the hollow graphite particles and the solid graphite particles can be selected such that the R value (R1) of the hollow graphite particles is smaller than the R value (R2) of the solid graphite particles (that is, R1 < R2). The "R value" herein is the ratio of the peak intensity ($I_{D1}$) of D band to the peak intensity ($I_{G1}$) of G band ($I_{D1}/I_{G1}$) in the Raman spectrum. For example, the hollow graphite particles and the solid graphite particles can be selected such that the R value (R2) of the solid graphite particles and the R value (R1) of the hollow graphite particles satisfy the relationship of $1 < (R2/R1) \leq 4$, more preferably $1.2 \leq (R2/R1) \leq 3$, still more preferably $1.3 \leq (R2/R1) \leq 2.5$, for example $1.4 \leq (R2/R1) \leq 2.2$. In an energy storage device including a negative active material layer containing hollow graphite particles and solid graphite particles with such R values (R1 and R2), the effect of applying the present aspect can be more suitably exhibited. For example, in the case of using natural graphite particles as the hollow graphite particles, various artificial graphite particles can be preferably employed as the solid graphite particles.

The R value (R1) of the hollow graphite particles is normally less than about 0.25 (e.g. 0.05 or more and less than 0.25), preferably 0.23 or less (e.g. 0.10 or more and 0.23 or less), more preferably 0.22 or less (e.g. 0.12 or more and 0.22 or less), still more preferably 0.21 or less. In some aspects, the R1 of the hollow graphite particles may be 0.20 or less, or 0.18 or less. The R value (R2) of the solid graphite particles can be generally 0.25 or more (e.g. 0.25 or more and 0.80 or less), and is, for example, 0.28 or more (e.g. 0.28 or more and 0.70 or less), typically 0.30 or more (e.g. 0.30 or more and 0.60 or less). In some aspects, the R2 of the solid graphite particles may be 0.50 or less, or 0.40 or less.

The "Raman spectrum" herein is obtained by performing Raman spectrometry under the conditions of a laser wavelength of 532 nm (YAG laser), a grating of 600 g/mm, and a measurement magnification of 100 times with the use of "HR Revolution" manufactured by HORIBA, Ltd. Specifically, first, Raman spectrometry is performed over the range of 200 cm$^{-1}$ to 4000 cm$^{-1}$, and the obtained Raman spectrum data is normalized by the maximum Raman intensity (for example, the intensity of the G band) in the above-mentioned measurement range with the intensity at 4000 cm$^{-1}$ as a base intensity. Next, the normalized Raman spectrum obtained is subjected to fitting with the use of a Lorentz function, and the respective intensities of the G band near 1580 cm$^{-1}$ and the D band near 1350 cm$^{-1}$ are calculated as "peak intensity of G band ($I_{G1}$)" and "peak intensity of D band ($I_{D1}$)" .

The hollow graphite particles and the solid graphite particles may be, for example, spherical or non-spherical. Specific examples of the non-spherical shape include a spindle shape (e.g. an elliptic type and an ovoid shape), a scale-like shape and a plate shape. As the solid graphite particles, solid graphite particles that have a spindle shape can be particularly preferably employed. The hollow graphite particles and the solid graphite particles may have irregularities at the surface. The hollow graphite particles and the solid graphite particles may include particles that have multiple graphite particles aggregated.

The content ratio of the hollow graphite particles to the total content of the hollow graphite particles and the solid graphite particles is not particularly limited. The upper limit of the content ratio is preferably 90% by mass, more preferably 80% by mass, still more preferably 75% by mass. In contrast, the lower limit of the content ratio of the hollow graphite particles is preferably 10% by mass, more preferably 20% by mass, still more preferably 30% by mass (e.g. 40% by mass). The technique disclosed herein can be preferably carried out in an aspect in which the content ratio of the hollow graphite particles to the total content of the hollow graphite particles and the solid graphite particles is 10% by mass or more and 80% by mass or less (furthermore, 25% by mass or more and 65% by mass or less, particularly 50% by mass or more and 70% by mass or less). The content ratio of the hollow graphite particles to the total content of the hollow graphite particles and the solid graphite particles falls within the above-mentioned range, thereby allowing the discharge capacity per volume of the negative active material layer to be further increased. The content ratio of the hollow graphite particles to the total content of the hollow graphite particles and the solid graphite particles can be found out from, for example, the area ratio of each graphite particle in the SEM image, the change in the mass of the sample in a predetermined atmosphere (for example, water vapor atmosphere) in a thermogravimetric (TG) apparatus used, and the like.

(Other negative active materials)

The negative active material layer disclosed herein may contain graphite particles (hereinafter, referred to as third graphite particles), besides the hollow graphite particles and the solid graphite particles, as long as the effects of the present invention are not impaired. The third graphite particles can be appropriately selected from various known graphite particles, and used. The shapes of the third graphite particles are not particularly limited, but are preferably shapes that are close to a spherical shape or a spindle shape with an aspect ratio of 2 or more and 5 or less. In the case of containing the third graphite particles, the total mass of the hollow graphite particles and the solid graphite particles is normally 70% by mass or more, preferably 80% by mass or more, and more preferably 90% by mass or more, of the total mass of the graphite particles included in the negative active material layer. In particular, an energy storage device is preferable in which the hollow graphite particles and the solid graphite particles account for 100% by mass of the graphite particles included in the negative active material layer. As described above, the use of the graphite particles including substantially only two types of graphite particles: the hollow graphite particles and the solid graphite particles makes it possible to exhibit the above-described effects more efficiently while taking advantage of using the respective hollow graphite particles and solid graphite particles.

The number of types of graphite particles included in the negative active material layer can be generally found out, based on the difference in the outer shapes of the multiple types of graphite particles. The difference in the outer shape of the graphite particles can be, for example, at least one of a difference in average particle size, a difference in average aspect ratio, a difference in the surface profile of the particle (for example, the presence or absence of surface irregularities and the degree thereof, the presence or absence of surface coating and the degree thereof), a difference in sparse or dense form inside the particle, and the like. The outer shape of the graphite particle can be found out from, for example, an SEM image.

The negative active material layer disclosed herein may contain a carbonaceous active material (hereinafter, referred to as a non-graphitized carbonaceous active material), besides the hollow graphite particles, the solid graphite particles, and the third graphite particles, as long as the effects of the present invention are not impaired. Examples of the non-graphitized carbonaceous active material include hardly graphitizable carbon and easily graphitizable carbon. The term "hardly graphitizable carbon" herein refers to a carbon material in which the average grid spacing ($d_{002}$) of (002) plane, determined by an X-ray diffraction method before charge-discharge or in a discharged state, is 0.36 nm or more and 0.42 nm or less. The "easily graphitizable carbon" refers to a carbon material in which the ($d_{002}$) mentioned above is 0.34 nm or more and less than 0.36 nm. In the case of containing the non-graphitized carbonaceous active material, the total mass of the hollow graphite particles and the solid graphite particles is normally 70% by mass or more, preferably 80% by mass or more, more preferably 90% by mass or more, of the total mass of the carbonaceous active material included in the negative active material layer. In particular, an energy storage device is preferable in which the hollow graphite particles and the solid graphite particles account for 100% by mass of the carbonaceous active material included in the negative active material layer.

The negative active material layer disclosed herein may contain a negative active material (hereinafter, referred to as a non-carbonaceous active material) of a material other than the carbonaceous active material, as long as the effects of the present invention are not impaired. Examples of the non-carbonaceous active material include semimetals such as Si, metals such as Sn, oxides of these metals, or composites of these metals and carbon materials. The content of the non-carbonaceous active material is normally, for example, 30% by mass or less, preferably 20% by mass or less, more preferably 10% by mass or less, of the total mass of the negative active material included in the negative active material layer. The technique disclosed herein can be preferably carried out in an aspect in which the total ratio of the carbonaceous active material is more than 90% by mass of the total mass of the negative active material included in the negative active material layer. The ratio of the carbonaceous active material is more preferably 95% by mass or more, still more preferably 98% by mass or more, particularly preferably 99% by mass or more. In particular, an energy storage device is preferable in which the carbonaceous active material accounts for 100% by mass of the negative active material included in the negative active material layer.

(Fibrous carbon)

The solid graphite particles and the hollow graphite particles also have conductivity, but contain fibrous carbon as a conductive agent. The fibrous carbon is a component that functions as a conductive agent in the negative active material layer. The fibrous carbon is not particularly limited as long as the carbon is a fibrous carbon material. Examples of the fibrous carbon include carbon nanofibers, pitch-based carbon fibers, vapor growth carbon fibers, and carbon nanotubes (CNTs), and CNTs that are graphene-based carbon can be suitably used. Examples of the CNT include single-walled carbon nanotubes (SWCNT) formed from a single layer of graphene, and multi-walled carbon nanotubes (MWCNT) formed from two or more layers (e.g., two to twenty layers, typically two to sixty layers) of graphene. The CNT may be a CNT including SWCNT and MWCNT in arbitrary proportions (the ratio by mass of SWCNT : MWCNT is, for example, from 100 : 0 to 50 : 50, preferably from 100 : 0 to 80 : 20). Particularly preferred is a CNT substantially composed only of SWCNTs. The structure of the graphene-based carbon is not particularly limited, and may be any of a chiral (helical) type, a zigzag type, and an armchair type. In addition, the graphene-based carbon may contain a catalyst metal (e.g., Fe, Co, and platinum group elements (Ru, Rh, Pd, Os, Ir, Pt)) or the like used for the synthesis of the CNTs.

The aspect ratio (the average length L to the average diameter D) of the fibrous carbon is not particularly limited, but is, for example, 20 or more. The aspect ratio of the fibrous carbon is preferably 30 or more, more preferably 40 or more, still more preferably 50 or more, particularly preferably 70 or more, from viewpoints such as exhibiting better conductivity. The upper limit of the aspect ratio of the fibrous carbon is not particularly limited, but is, from the viewpoints of handleability, ease of production, and the like, appropriately set to be approximately 2000 or less, and is preferably 1000 or less, more preferably 500 or less, still more preferably 200 or less, particularly preferably 100 or less. For example, fibrous carbon with an average aspect ratio of 50 or more and 200 or less (furthermore, 50 or more and 100 or less, particularly 70 or more and 100 or less) is suitable.

The average diameter (fiber diameter) D of the fibrous carbon is, for example, 1 nm or more. The average diameter D of the fibrous carbon is preferably 3 nm or more, more preferably 5 nm or more, still more preferably 7 nm or more, particularly preferably 9 nm or more, from viewpoints such as exhibiting better conductivity. The upper limit of the average diameter D of the fibrous carbon is not particularly limited, but is appropriately set to be approximately 100 nm or less, and is preferably 80 nm or less, more preferably 50 nm or less, still more preferably 30 nm or less, particularly preferably 15 nm or less. For example, fibrous carbon with an average diameter D of 1 nm or more and 100 nm or less (for example, 5 nm or more and 80 nm or less, typically 10 nm or more and 60 nm or less) is suitable. The use of the fibrous carbon in the size mentioned above more effectively enhances the affinity between: the solid graphite particles and hollow graphite particles; and the fibrous carbon. Thus, the effect of applying the technique disclosed herein can be more effectively exhibited.

The average length L of the fibrous carbon is, for example, 0.5 $\mu$m or more. The average length L of the fibrous carbon is preferably 0.8 $\mu$m or more, more preferably 1 $\mu$m or more, still more preferably 2 $\mu$m or more, particularly preferably 5 $\mu$m or more, from viewpoints such as exhibiting better conductivity. The upper limit of the average length L of the fibrous carbon is not particularly limited, but is appropriately set to be approximately 50 $\mu$m or less, and is preferably 30 $\mu$m or less, more preferably 20 $\mu$m or less, still more preferably 15 $\mu$m or less, particularly preferably 10 $\mu$m or less. For example, fibrous carbon with an average length L of 1 $\mu$m or more and 20 $\mu$m or less (for example, 2 $\mu$m or more and 10 $\mu$m or less, typically 2 $\mu$m or more and 6 $\mu$m or less) is suitable.

In accordance with a preferred embodiment, the average length L of the fibrous carbon is larger than the median diameter D1 of the solid graphite particles and smaller than the median diameter D2 of the hollow graphite particles (that is, D1/L < 1 and D2/L > 1). The use of the fibrous carbon in the size mentioned above more effectively enhances the affinity among the solid graphite particles in small particle sizes, the hollow graphite particles in large particle sizes, and the fibrous carbon. Thus, the effect of applying the technique disclosed herein can be more effectively exhibited.

The ratio (D1/L) of the median diameter D1 of the solid graphite particles to the average length L of the fibrous carbon is not particularly limited, but may be less than 1 (that is, D1/L < 1). The ratio (D1/L) is preferably 0.9 or less, more preferably 0.8 or less, still more preferably 0.7 or less. The lower limit of the ratio (D1/L) of the median diameter D1 of the solid graphite particles to the average length L of the fibrous carbon is not particularly limited, but may be, for example, 0.1 or more. The ratio (D1/L) is preferably 0.2 or more, more preferably 0.3 or more, still more preferably 0.4 or more.

The ratio (D2/L) of the median diameter D2 of the hollow graphite particles to the average length L of the fibrous carbon is not particularly limited, but may be more than 1 (that is, D2/L > 1). The ratio (D2/L) is preferably 1.2 or more, more preferably 1.3 or more, still more preferably 1.5 or more. The upper limit of the ratio (D2/L) of the median diameter D2 of the hollow graphite particles to the average length L of the fibrous carbon is not particularly limited, but may be, for example, 5 or less. The ratio (D2/L) is preferably 4 or less, more preferably 3.5 or less, still more preferably 3 or less. In some aspects, the aspect ratio (D2/L) may be 2.5 or less, or 2 or less.

Preferred examples of the fibrous carbon disclosed herein include: fibrous carbon that has an aspect ratio of 20 or more and 2000 or less and ratio values of $0.1 \leq D1/L < 1$ and $1 < D2/L \leq 5$; fibrous carbon that has an aspect ratio of 30 or more and 500 or less and ratio values of $0.1 \leq D1/L \leq 0.9$ and $1.1 \leq D2/L \leq 4$; fibrous carbon that has an aspect ratio of 50 or more and 300 or less and ratio values of $0.2 \leq D1/L \leq 0.8$ and $1.2 \leq D2/L \leq 3$; and fibrous carbon that has an aspect ratio of 70 or more and 100 or less and ratio values of $0.3 \leq D1/L \leq 0.7$ and $1.5 \leq D2/L \leq 2.5$. The use of the fibrous carbon with the aspect ratio and average length L in such predetermined ranges more effectively enhances the affinity among the solid graphite particles in small particle sizes, the hollow graphite particles in large particle sizes, and the fibrous carbon. Thus, an energy storage device that is excellent in charge-discharge cycle performance and power performance can be created, which have failed to be obtained conventionally.

It is to be noted that the average diameter and the average length are defined as average values for arbitrary ten sites of the fibrous carbon observed with an electron microscope.

The average grid spacing $(d_{002})$ of (002) plane of the fibrous carbon, determined by an X-ray diffraction method, is preferably less than 0.340 nm. When the fibrous carbon is small in average grid spacing $(d_{002})$ and high in crystallinity as described above, the conductivity is further increased. It is to be noted that the lower limit of the average grid spacing ($d_{002}$) of the fibrous carbon can be, for example, 0.330 nm. In addition, the full width at half maximum (002) of a peak corresponding to the (002) plane of the fibrous carbon, determined by an X-ray diffraction method, is, for example, 0.5° or more. The full width at half maximum (002) of the fibrous carbon is preferably less than 0.7°.

Fibrous carbon can be obtained by, for example, a method in which a polymer is formed into a fibrous form by a spinning method or the like and heat-treated under an inert atmosphere, a vapor phase growth method in which an organic compound is reacted at a high temperature in the presence of a catalyst, or the like. As the fibrous carbon, fibrous carbon obtained by a vapor phase growth method (vapor phase growth method fibrous carbon) is preferable. Commercially available fibrous carbon can be used.

The content of the fibrous carbon in the negative active material layer may be, for example, 0.05% by mass or more and 20% by mass or less, but is preferably 0.1% by mass or more and 10% by mass or less, more preferably 0.5% by mass or more and 5% by mass or less. The content of the fibrous carbon in the negative active material layer may be still more preferably 3% by mass or less (for example, 2% by mass or less, typically 1% by mass or less). The content of the fibrous carbon is set to be equal to or more than the lower limit mentioned above, thereby allowing conductivity to be further enhanced. In contrast, the content of the fibrous carbon is set to be equal to or less than the upper limit mentioned above, thereby the contents of the solid graphite particles and hollow graphite particles to be relatively increased, and allowing the energy density to be increased.

The negative active material layer may contain therein other conductive agents other than the fibrous carbon. Examples of the other conductive agents include carbonaceous materials other than the fibrous carbon, metals, and conductive ceramics. Examples of the carbonaceous materials include non-graphitized carbon and graphene-based carbon. Examples of the non-graphitized carbon include carbon black. Examples of the carbon black include furnace black, acetylene black, and ketjen black. Examples of the graphene-based carbon include graphene and fullerene. The content of the other conductive agents in the negative active material layer is, however, preferably less than 1% by mass, more preferably less than 0.1% by mass, still more preferably substantially 0% by mass. As described above, the use of substantially only the fibrous carbon as the conductive agent reduces the content of the conductive agent, thereby allowing the energy density to be further increased.

(Other optional components)

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the negative active material layer is preferably 1% by mass or more and 10% by mass or less, more preferably 3% by mass or more and 9% by mass or less. The content of the binder falls within the range mentioned above, thereby allowing the active material to be stably held.

Examples of the thickener include polysaccharide polymers such as a carboxymethylcellulose (CMC) and a methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

The upper limit of the ratio of Q2 to Q1 (Q2/Q1) is preferably 0.94, more preferably 0.92, where Q1 is the surface roughness of a region of the negative substrate with the negative active material layer layered thereon, and Q2 is the surface roughness of a region of the negative substrate without the negative active material layer layered. The Q2/Q1 is decreased as the pressure applied to the negative substrate is increased, because the surface roughness of a region with the negative active material layer formed is increased. In other words, the surface roughness of the region with the negative active material layer layered and the surface roughness of the region without the negative active material layer layered (so-called region with the negative substrate exposed) have almost the same value when no pressure applied to the negative substrate. More specifically, Q2/Q1 will become close to 1. The energy storage device has no or a low pressure applied to the negative active material layer when the Q2/Q1 exceeds 0.92. Thus, the negative active material density becomes relatively low, and the energy density of the energy storage device can be reduced. In contrast, the lower limit of the surface roughness ratio (Q2/Q1) is preferably 0.70, more preferably 0.75. When the Q2/Q1 is equal to or more than the lower limit mentioned above, a negative electrode with a high active material density can be obtained, and an energy storage device with enhanced life characteristics can be provided.

The "surface roughness" means a value obtained by measuring the center line roughness Ra of a surface (for a region with the active material layer layered, a surface after removing the active material layer) of the substrate with a laser microscope in accordance with JIS-B0601 (2013). Specifically, the surface roughness Q2 of a part of the negative electrode with the negative substrate exposed is measured in accordance with JIS-B0601 (2013) with the use of a commercially available laser microscope (device name "VK-8510" manufactured by KEYENCE CORPORATION). In this regard, as measurement conditions, a measurement region (area) is 149 $\mu$m$\times$112 $\mu$m (16688 $\mu$m$^2$), and a measurement pitch is 0.1 $\mu$m. Next, the negative electrode is subjected to ultrasonic cleaning to remove the negative active material layer, and the surface roughness Q1 of the region with the negative active material layer layered is measured similarly to the surface roughness of the part with the negative substrate exposed.

The lower limit of the density of the negative active material layer is preferably 1.40 g/cm$^3$, more preferably 1.5 g/cm$^3$, still more preferably 1.51 g/cm$^3$. In some aspects, the density of the negative active material layer may be 1.53 g/cm$^3$ or more, or 1.55 g/cm$^3$ or more. When the density of the negative active material layer falls within the range mentioned above, an energy storage device with a high energy density can be obtained. While the use of the negative electrode pressed such that the negative active material layer has the density mentioned above may cause favorable electron conductivity obtained by connections among the solid graphite particles that are small in particle size, the hollow graphite particles that are large in particle size, and the conductive agent to be damaged by the pressing, and cause the charge-discharge cycle performance to tend to be decreased, according to the present aspect, containing fibrous carbon as the conductive agent causes the favorable electron conductivity by the connections to be maintained over a long period of time even after the pressing and after charge-discharge cycles. The lower limit of the density of the negative active material layer is preferably 1.7 g/cm$^3$, more preferably 1.65 g/cm$^3$, still more preferably 1.6 g/cm$^3$. When the negative active material layer falls within such a density range, a balance between a high energy density and favorable charge-discharge cycle performance can be achieved at a higher level.

<Energy storage device>

The energy storage device according to an embodiment of the present invention includes a positive electrode, a negative electrode, and a nonaqueous electrolyte. Hereinafter, a nonaqueous electrolyte secondary battery (hereinafter, also referred to simply as a "secondary battery") will be described as an example of the energy storage device. The positive electrode and the negative electrode typically form an electrode assembly where the positive electrode and the negative electrode are alternately superposed by stacking or winding with a separator interposed therebetween. This electrode assembly is housed in a case, and the case is filled with the nonaqueous electrolyte. The nonaqueous electrolyte is interposed between the positive electrode and the negative electrode. As the case, a known metal case, resin case, or the like can be used, which is typically used as a case for a secondary battery.

[Negative electrode]

The negative electrode provided in the secondary battery is the above-described negative electrode according to an embodiment of the present invention. The energy storage device includes the negative electrode, and thus, a balance the charge-discharge cycle performance and the power performance can be achieved at a higher level.

[Positive electrode]

The positive electrode includes a positive substrate and a positive active material layer disposed directly on the positive substrate or over the positive substrate with an intermediate layer interposed therebetween. The configuration of the intermediate layer is not particularly limited, and for example, can be selected from the configurations exemplified for the negative electrode.

The positive substrate has conductivity. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H4160 (2006).

The average thickness of the positive substrate is preferably 3 $\mu$m or more and 50 $\mu$m or less, more preferably 5

$\mu$m or more and 40 $\mu$m or less, still more preferably 8 $\mu$m or more and 30 $\mu$m or less, particularly preferably 10 $\mu$m or more and 25 $\mu$m or less. When the average thickness of the positive substrate falls within the range mentioned above, the energy density per volume of the secondary battery can be increased while increasing the strength of the positive substrate.

The positive active material layer includes a positive active material. The positive active material layer includes optional components such as a conductive agent, a binder, a thickener, and a filler, if necessary. The optional components such as a conductive agent, a binder, a thickener, and a filler can be selected from the materials exemplified for the negative electrode.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an $\alpha$-NaFeO$_2$-type crystal structure, lithium-transition metal composite oxides that have a spinel-type crystal structure, polyanion compounds, chalcogenides, and sulfur. Examples of the lithium-transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_\gamma$Co$_{(1-x-\gamma)}$]O$_2$ ($0 \leq x < 0.5$, $0 < \gamma < 1$), Li[Li$_x$Co$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < \gamma < 1$), Li[Li$_x$Ni$_\gamma$Mn$_\beta$Co$_{(1-x-\gamma-\beta)}$]O$_2$ ($0 \leq x < 0.5$, $0 < \gamma$, $0 < \beta$, $0.5 < \gamma + \beta < 1$), and Li[Li$_x$Ni$_\gamma$Co$_\beta$Al$_{(1-x-\gamma-\beta)}$]O$_2$ ($0 \leq x < 0.5$, $0 < \gamma$, $0 < B$, $0.5 < \gamma + \beta < 1$). Examples of the lithium-transition metal composite oxides that have a spinel-type crystal structure include Li$_x$Mn$_2$O$_4$ and Li$_x$Ni$_\gamma$Mn$_{(2-\gamma)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include a titanium disulfide, a molybdenum disulfide, and a molybdenum dioxide. Some of atoms or polyanions in these materials may be substituted with atoms or anion species composed of other elements. The surfaces of these materials may be coated with other materials. In the positive active material layer, one of these materials may be used singly, or two or more thereof may be used in mixture.

The positive active material is typically particles (powder). The average particle size of the positive active material is preferably 0.1 $\mu$m or more and 20 $\mu$m or less, for example. By setting the average particle size of the positive active material to be equal to or more than the lower limit mentioned above, the positive active material is easily manufactured or handled. By setting the average particle size of the positive active material to be equal to or less than the upper limit mentioned above, the electron conductivity of the positive active material layer is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the positive active material in the positive active material layer is preferably 50% by mass or more and 99% by mass or less, more preferably 70% by mass or more and 98% by mass or less, still more preferably 80% by mass or more and 95% by mass or less. When the content of the positive active material falls within the range mentioned above, a balance can be achieved between the increased energy density and productivity of the positive active material layer.

The conductive agent is not particularly limited as long as the agent is a material with conductivity. Examples of such a conductive agent include carbonaceous materials, metals, and conductive ceramics. Examples of the carbonaceous materials include graphitized carbon, non-graphitized carbon, and graphene-based carbon. Examples of the non-graphitized carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material carbon black combined with a CNT may be used. Among these materials, carbon black is preferable from the viewpoints of electron conductivity and coatability, and in particular, acetylene black is preferable.

The content of the conductive agent in the positive active material layer is preferably 1% by mass or more and 10% by mass or less, more preferably 3% by mass or more and 9% by mass or less. The content of the conductive agent falls within the range mentioned above, thereby allowing the energy density of the secondary battery to be increased.

The optional components such as a binder, a thickener, and a filler can be selected from the materials exemplified for the negative electrode.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

[Separator]

The separator can be appropriately selected from known separators. As the separator, for example, a separator composed of only a substrate, a separator where a heat resistant layer including heat resistant particles and a binder is formed on one or both surfaces of the substrate, or the like can be used. Examples of the material for the substrate of the separator include a woven fabric, a nonwoven fabric, and a porous resin film. Among these materials, a porous resin film is preferable from the viewpoint of strength, and a nonwoven fabric is preferable from the viewpoint of the liquid retaining property of the nonaqueous electrolyte. As the material of the substrate of the separator, a polyolefin such as a polyethylene or a polypropylene is preferable from the viewpoint of a shutdown function, and a polyimide, an aramid, or the like is preferable from the viewpoint of resistance to oxidation and decomposition. As the substrate of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, the silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

(Nonaqueous electrolyte)

The nonaqueous electrolyte can be appropriately selected from known nonaqueous electrolytes. As the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, the cyclic carbonate or the chain carbonate is preferably used, more preferably, the cyclic carbonate and the chain carbonate are used in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, the volume ratio of the cyclic carbonate to the chain carbonate (cyclic carbonate : chain carbonate) preferably falls within the range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these salts, the inorganic lithium salts are preferable, and $LiPF_6$ is more preferable.

The content of the electrolyte salt in the nonaqueous electrolyte solution is, at 20°C under 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, and particularly preferably 0.7 mol/dm$^3$ or more and 1.5 mol/dm$^3$ or less. When the content of the electrolyte salt falls within the range mentioned above, the ionic conductivity of the nonaqueous electrolyte solution can be increased.

The nonaqueous electrolyte solution may contain an additive, besides the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds mentioned above, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less, with respect to a total mass of the nonaqueous electrolyte solution. The content of the additive falls within the above range, thereby making it possible to improve capacity retention performance or cycle performance after high-temperature storage, and to further improve safety.

For the nonaqueous electrolyte, a solid electrolyte may be used, or a nonaqueous electrolyte solution and a solid electrolyte may be used in combination.

The solid electrolyte can be selected from arbitrary materials with ionic conductivity, which are solid at normal temperature (for example, from 15°C to 25°C), such as lithium, sodium and calcium. Examples of the solid electrolyte include a sulfide solid electrolyte, an oxide solid electrolyte, an oxynitride solid electrolyte, and a polymer solid electrolyte.

Examples of the sulfide solid electrolyte include $Li_2S-P_2S_5$, $LiI-Li_2S-P_2S_5$, and $Li_{10}Ge-P_2S_{12}$ in the case of a lithium ion secondary battery.

<Configuration of energy storage apparatus>

The shape of the energy storage device according to the present embodiment is not to be considered particularly limited, and examples thereof include cylindrical batteries, prismatic batteries, flattened batteries, coin batteries and button batteries.

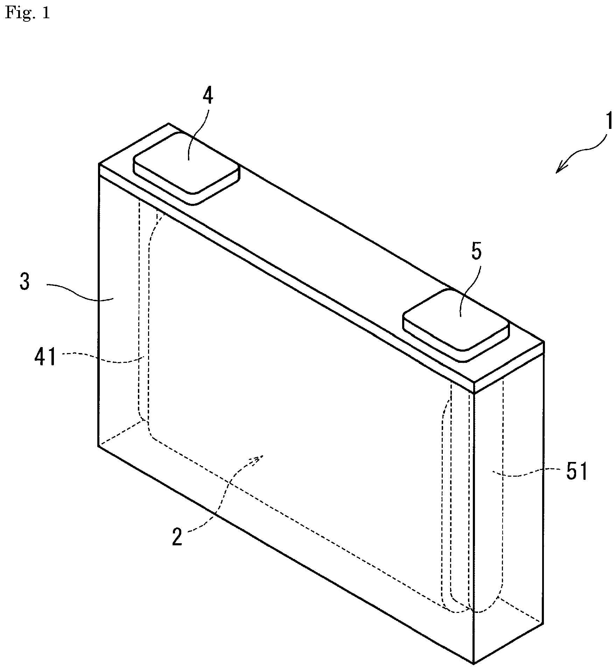

Fig. 1 shows an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic battery case 3. The positive electrode is electrically connected to a positive electrode terminal 4 via a positive electrode lead 41. The negative electrode is electrically connected to a negative electrode terminal 5 via a negative electrode lead 51.

The energy storage device according to the present embodiment can be mounted as an energy storage unit (battery module) configured with plurality of energy storage devices 1 assembled, on power sources for automobiles such as electric vehicles (EV), hybrid vehicles (HEV), and plug-in hybrid vehicles (PHEV), power sources for electronic devices such as personal computers and communication terminals, and power sources for power storage, or the like. In this case, the technique of the present invention may be applied to at least one energy storage device included in the energy storage unit.

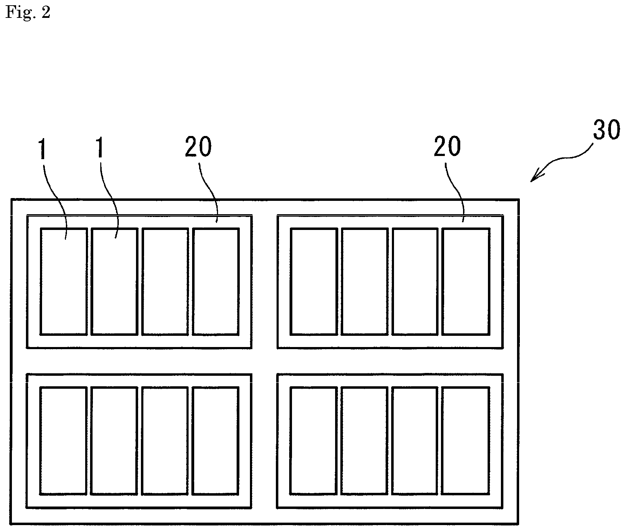

Fig. 2 shows an example of an energy storage apparatus 30 obtained by assembling energy storage units 20 that each have two or more electrically connected energy storage devices 1 assembled. The energy storage apparatus 30 may include a busbar (not shown) that electrically connects two or more energy storage devices 1, a busbar (not shown) that electrically connects two or more energy storage units 20, and the like. The energy storage unit 20 or the energy storage apparatus 30 may include a state monitor (not shown) that monitors the state of one or more energy storage devices 1.

<Method for manufacturing energy storage device>

A method for manufacturing the energy storage device according to the present embodiment can be appropriately selected from known methods. The manufacturing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween. In the method for manufacturing the energy storage device according to the present embodiment, a negative active material containing hollow graphite particles that have a median diameter D2 and solid graphite particles that have a smaller median diameter D1 than the hollow graphite particles, and fibrous carbon as a conducive agent are used in the step of preparing a negative electrode.

In the step of preparing the negative electrode, a negative active material layer containing the negative active material including the hollow graphite particles and the solid graphite particles is layered along at least one surface of a negative substrate by, for example, applying a negative composite paste to the negative substrate. Specifically, for example, a negative composite paste is applied to the negative substrate, and dried to layer the negative active material layer. After the drying mentioned above, pressing is performed in the average thickness direction of the negative active material layer. According to a preferred embodiment, the negative active material layer is pressed such that the density of the negative active material layer is 1.40 g/cm$^3$ or more and 1.70 g/cm$^3$ or less (preferably 1.50 g/cm$^3$ or more and 1.65 g/cm$^3$ or less). The pressure (linear pressure) during the pressing is not particularly limited, but is preferably about 10 kgf/mm or more and 100 kgf/mm or less, more preferably 20 kgf/mm or more and 80 kgf/mm or less.

Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, followed by sealing the inlet.

The thus obtained energy storage device can be excellent in battery performance. For example, the energy storage device can satisfy at least one (preferably all) of excellent charge-discharge cycle performance, excellent power performance, and high energy density.

<Other embodiments>

It is to be noted that the energy storage device according to the present invention is not to be considered limited to the embodiment mentioned above, and various changes may be made without departing from the scope of the present invention. For example, the configuration according to one embodiment can be added to the configuration according to another embodiment, or a part of the configuration according to one embodiment can be replaced with the configuration according to another embodiment or a well-known technique. Furthermore, the configuration of one embodiment can be partially deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, size, capacity, and the like of the energy storage device are arbitrary. The present invention can also be applied to capacitors such as various secondary batteries, electric double-layer capacitors, or lithium ion capacitors.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

EXAMPLES

Hereinafter, the present invention will be described more specifically with reference to examples. The present invention is not limited to the following examples.

[Fabrication of negative electrode according to Example 1]

Prepared was a negative composite paste containing a negative active material of a composition (the content ratio to the total content of solid graphite particles and hollow graphite particles) shown in Table 1, a styrene-butadiene rubber as a binder, a carboxymethyl cellulose as a thickener, and carbon nanotubes as a conductive agent, with water as a dispersion medium. The ratios of the negative active material, binder, thickener, and conductive agent were 96.8 : 1.0 : 1.2 : 1.0 in terms of ratio by mass of solid content. The negative composite paste was applied to both surfaces of an 8 $\mu$m-thick negative substrate of copper foil (surface roughness: 0.74 $\mu$m), and dried to form a negative active material layer. The amount of the negative composite (obtained by evaporating the dispersion medium from the negative composite paste) applied per unit area of one surface after the drying was adjusted to be 0.98 g/100 cm$^2$. Then, pressing was performed with the use of a roll press so as to achieve a pressure (linear pressure) of 20 kgf/mm or more. As the carbon nanotubes, carbon nanotubes with an aspect ratio of 83, an average length of 5 $\mu$m, and an average diameter of 60 nm were used. In this manner, a negative electrode according to Example 1 was obtained.

[Fabrication of negative electrodes according to Example 2, Comparative Example 10, Comparative Example 12, and Comparative Example 14]

Negative electrodes according to Example 2, Comparative Example 10, Comparative Example 12, and Comparative Example 14 were fabricated in accordance with the same procedure as in Example 1, except for using negative active materials of compositions shown in Table 1.

[Fabrication of negative electrodes according to Comparative Example 1, Comparative Example 4, Comparative Example 7, Comparative Example 11, and Comparative Example 13]

Negative electrodes according to Comparative Example 1, Comparative Example 4, Comparative Example 7, Comparative Example 11, and Comparative Example 13 were fabricated in accordance with the same procedure as in Example 1, except for using negative active materials of compositions shown in Table 1 and using no conductive agent. The ratios of the negative active material, binder, and thickener for each example were 97.8 : 1.0 : 1.2 in terms of ratio by mass of solid content.

[Fabrication of negative electrodes according to Comparative Example 2, Comparative Example 5, and Comparative Example 8]

Negative electrodes according to Comparative Example 2, Comparative Example 5, and Comparative Example 8 were fabricated in accordance with the same procedure as in Example 1, except for using negative active materials of compositions shown in Table 1 and using scale-like graphite as a conductive agent instead of the carbon nanotubes. The ratios of the negative active material, binder, thickener, and conductive agent for each example were 96.8 : 1.0 : 1.2 : 1.0 in terms of ratio by mass of solid content.

[Fabrication of Negative electrodes according to Comparative Example 3, Comparative Example 6, and Comparative Example 9]

Negative electrodes according to Comparative Example 3, Comparative Example 6, and Comparative Example 9 were fabricated in accordance with the same procedure as in Example 1 except for using negative active materials of compositions shown in Table 1 and using acetylene black as a conductive agent instead of the carbon nanotubes. The ratios of the negative active material, binder, thickener, and conductive agent for each example were 96.8 : 1.0 : 1.2 : 1.0 in terms of ratio by mass of solid content.

The materials (negative active material, conductive agent) and physical property values of the negative electrode for each example are shown in Table 1.

[Fabrication of energy storage device]

The negative electrode shown in Table 1, a positive electrode described below, and a 14 $\mu$m-thick polyethylene separator, which were stacked, were wound to prepare energy storage devices according to Examples 1 and 2 and Comparative Examples 1 to 14. For the positive electrode, a positive composite paste containing $LiNi_{0.6}Mn_{0.2}Co_{0.2}O_2$ as a positive active material, a polyvinylidene fluoride (PVDF) as a binder, and acetylene black as a conductive agent, with n-methyl-2-pyrrolidone (NMP) as a dispersion medium was prepared. The ratios of the positive active material, binder, and conductive agent were 94.5 : 4.0 : 1.5 in terms of ratio by mass of solid content. The positive composite paste was applied to both surfaces of a 15 µm-thick positive substrate of aluminum foil, pressed, and dried to form a positive active material layer. The amount of the positive composite (obtained by evaporating the dispersion medium from the positive composite paste) applied per unit area of one surface after the drying was adjusted to be 1.7 g/100 cm².

Next, a nonaqueous electrolyte was obtained by dissolving $LiPF_6$ of 1.2 mol/dm³ in a nonaqueous solvent obtained by mixing an ethylene carbonate (EC), a dimethyl carbonate (DMC), and an ethyl methyl carbonate (EMC) at volume ratios of EC : DMC : EMC = 30 : 35 : 35. Then, the positive electrode and the negative electrode were stacked with a separator of polyethylene microporous membrane interposed therebetween, thereby fabricating an electrode assembly. The electrode assembly was housed into an aluminum prismatic container case, and a positive electrode terminal and a negative electrode terminal were attached. After the nonaqueous electrolyte was injected into the case (prismatic container case), the inlet was sealed, thereby providing the energy storage devices according to the examples and the comparative examples.

[Evaluation]

(Ratio of surface roughness of negative substrate)

The surface roughness Q1 of the region with the negative active material layer layered and the surface roughness Q2 of the part of the negative electrode with the negative substrate exposed were measured with the use of a laser microscope as described above. Thereafter, the surface roughness ratio (Q2/Q1) of the negative substrate was calculated with the use of the measured Q1 and Q2. In this regard, for measuring the surface roughness Q1 of the region with the negative active material layer layered, the negative active material layer was removed by ultrasonic cleaning in water for three minutes and in ethanol for one minute with the use of a desktop ultrasonic cleaner 2510J-DTH from Branson Ultrasonics, Emerson Japan, Ltd.

(Density of negative active material layer)

The density of the negative active material layer was calculated from the following formula, where W (g/100 cm²) is the amount of the negative composite applied, and T (cm) is the thickness of the negative active material layer before the charge-discharge described later.

$$\text{Density of negative active material layer (g/cm}^3) = W/(T \times 100)$$

(DCR and capacity retention ratio after charge-discharge cycle)

(1) Initial discharge capacity

Constant current constant voltage (CCCV) charge was performed until the charge current reached 0.5 A or less under the conditions of charge current: 15.0 A and end-of-charge voltage: 4.25 V in a thermostatic bath at 25°C, followed by a rest period of 20 minutes. Thereafter, constant current (CC) discharge was performed at a discharge current of 45.0 A and an end-of-discharge voltage of 2.75 V. The discharge capacity at this time was defined as an "initial discharge capacity".

(2) DCR after initial discharge capacity measurement

The DCR (direct-current resistance) of the energy storage device after the measurement of the initial discharge capacity was evaluated. The energy storage devices after the measurement of the initial discharge capacity was subjected to constant current charge at a current value of 15.0 A in a thermostatic bath at 25°C for an amount of charge corresponding to 50% SOC of the discharge capacity measured under the same conditions as those in the discharge capacity measurement method mentioned above. After the SOC of the battery was adjusted to 50% under the conditions mentioned above, each energy storage device was discharged for 10 seconds at current values of 45.0 A, 90.0 A, 135.0 A, and 300.0 A, and from the graph of current-voltage performance obtained by plotting the voltage 10 seconds after the start of the discharge on the vertical axis and the discharge current value on the horizontal axis, a DCR value was obtained as a value corresponding to the slope. Regarding this DCR value, Table 1 shows the ratio [%] of the DCR value for each test example to the DCR value of Comparative Example 1 (relative ratio [%] to Comparative Example 1).

The determination was made in accordance with the following three stages. If the evaluation is considered as A, the effect is favorable.

A: The relative ratio to Comparative Example 1 is less than 107%.
B: The relative ratio to Comparative Example 1 is 107% or more and 109% or less.
C: The relative ratio to Comparative Example 1 is more than 109%. (3) Capacity retention ratio after charge-discharge cycle

Each of the energy storage devices after the measurement of the "initial discharge capacity" were subjected to constant current constant voltage (CCCV) charge until the charge current reached 0.5 A or less under the conditions of charge current: 15.0 A and end-of-charge voltage: 4.25 V in a thermostatic bath at 45°C, followed by a rest period of 10 minutes. Thereafter, constant current (CC) discharge was performed at a discharge current of 45.0 A and an end-of-discharge voltage of 2.75 V, followed by a rest period of 10 minutes. This charge-discharge cycle was performed for 300 cycles. After the 300 cycles, the discharge capacity was measured under the same conditions as those in the test of measuring the "initial discharge capacity", and the discharge capacity at this time was defined as a "capacity after 300 cycles". The "discharge capacity after 300 cycles" with respect to the "initial discharge capacity" was defined as a capacity retention ratio after the charge-discharge cycle.
The determination was made in accordance with the following three stages. If the evaluation is considered as A, the effect is favorable.

A: The capacity retention ratio after the charge-discharge cycles is more than 89%.
B: The capacity retention ratio after the charge-discharge cycles is 85% or more and 89% or less.
C: The capacity retention ratio after the charge-discharge cycles is less than 85%.

Table 1 shows the results of evaluating the negative electrodes according to Examples 1 and 2 and Comparative Examples 1 to 14.

[Table 1]

| | Content ratio of negative active material (% by mass) | | Median diameter of graphite particles (μm) | | Conductive agent | | Surface roughness ratio Q2/Q1 of negative active material layer | Density of negative active material layer | DCR after initial discharge capacity measurement (25°C) | | Charge-discharge cycle performance (300 cycles) | |
| | Solid graphite particle | Hollow graphite particle | Solid graphite particle | Hollow graphite particle | Material | Aspect ratio | | Density [g/cm³] | Relative ratio to Comparative Example 1 [%] | Determination | Capacity retention ratio [%] | Determination |
|---|---|---|---|---|---|---|---|---|---|---|---|---|
| Comparative Example 1 | 50 | 50 | 3 | 8 | - | - | 0.83 | 1.55 | 100 | A | 64 | C |
| Comparative Example 2 | 50 | 50 | 3 | 8 | Scale-like graphite | 11.0 | 0.86 | 1.55 | 96 | A | 89 | B |
| Comparative Example 3 | 50 | 50 | 3 | 8 | Acetylene black | 1.2 | 0.82 | 1.55 | 99 | A | 85 | B |
| Example 1 | 50 | 50 | 3 | 8 | Carbon nanotube | 83.0 | 0.82 | 1.55 | 100 | A | 97 | A |
| Comparative Example 4 | 50 | 50 | 3 | 14 | - | - | 0.83 | 1.55 | 106 | A | 66 | C |
| Comparative Example 5 | 50 | 50 | 3 | 14 | Scale-like graphite | 11.0 | 0.85 | 1.55 | 103 | A | 89 | B |
| Comparative Example 6 | 50 | 50 | 3 | 14 | Acetylene black | 1.2 | 0.82 | 1.55 | 105 | A | 86 | B |
| Example 2 | 50 | 50 | 3 | 14 | Carbon nanotube | 83.0 | 0.82 | 1.55 | 106 | A | 97 | A |
| Comparative Example 7 | 50 | 50 | 20 | 14 | - | - | 0.82 | 1.55 | 112 | C | 28 | C |
| Comparative Example 8 | 50 | 50 | 20 | 14 | Scale-like graphite | 11.0 | 0.80 | 1.55 | 110 | C | 96 | A |
| Comparative Example 9 | 50 | 50 | 20 | 14 | Acetylene black | 1.2 | 0.81 | 1.55 | 110 | C | 91 | A |

(continued)

| | Content ratio of negative active material (% by mass) | | Median diameter of graphite particles ($\mu$m) | | Conductive agent | | Surface roughness ratio Q2/Q1 of negative active material layer | Density of negative active material layer | DCR after initial discharge capacity measurement (25°C) | | Charge-discharge cycle performance (300 cycles) | |
|---|---|---|---|---|---|---|---|---|---|---|---|---|
| | Solid graphite particle | Hollow graphite particle | Solid graphite particle | Hollow graphite particle | Material | Aspect ratio | | Density [g/cm$^3$] | Relative ratio to Comparative Example 1 [%] | Determination | Capacity retention ratio [%] | Determination |
| Comparative Example 10 | 50 | 50 | 20 | 14 | Carbon nanotube | 83.0 | 0.81 | 1.55 | 112 | C | 89 | B |
| Comparative Example 11 | 100 | 0 | 3 | - | - | - | 0.83 | 1.55 | 107 | B | 47 | C |
| Comparative Example 12 | 100 | 0 | 3 | - | Carbon nanotube | 83.0 | 0.82 | 1.55 | 107 | B | 86 | B |
| Comparative Example 13 | 0 | 100 | - | 8 | - | - | 0.86 | 1.55 | 93 | A | 58 | C |
| Comparative Example 14 | 0 | 100 | - | 8 | Carbon nanotube | 83.0 | 0.85 | 1.55 | 93 | A | 61 | C |

As shown in Table 1, Examples 1 and 2 including the negative active material layers each containing the solid graphite particles with the median diameter D1, the hollow graphite particles with the median diameter D2 larger than that of the solid graphite particles, and the fibrous carbon as a conductive agent were favorable in capacity retention ratio after the charge-discharge cycles while keeping the initial resistance low.

In contrast, if the median diameter D2 of the hollow graphite particles was smaller than that of the solid graphite particles, the result was high in initial resistance. In addition, if no fibrous carbon was contained as a conductive agent, the result was inferior in the effect of suppressing the decrease in the capacity retention ratio after the charge-discharge cycles. If both the solid graphite particles and the hollow graphite particles were not contained as the negative active material, the result was inferior in either one or both of the low resistance and the effect of suppressing the decrease in the capacity retention ratio after the charge-discharge cycles.

As described above, it has been demonstrated that the energy storage device is excellent in charge-discharge cycle performance and power performance.

DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

**Claims**

1. A negative electrode for an energy storage device, comprising a negative substrate and a negative active material layer layered directly or indirectly on at least one surface of the negative substrate,

   wherein the negative active material layer contains: solid graphite particles that have a median diameter D1; hollow graphite particles that have a larger median diameter D2 than the solid graphite particles; and a conductive agent, and
   wherein the conductive agent is fibrous carbon.

2. The negative electrode according to claim 1, wherein a relationship between the median diameter D1 of the solid graphite particles and the median diameter D2 of the hollow graphite particles satisfies $1 < (D2/D1) \leq 10$.

3. The negative electrode according to claim 1 or 2, wherein the median diameter D1 of the solid graphite particles is 1 $\mu$m or more and less than 5 $\mu$m, and

   the median diameter D2 of the hollow graphite particles is 5 $\mu$m or more and 20 $\mu$m or less,
   wherein the median diameter is measured according to the method described in the description.

4. The negative electrode according to any one of claims 1 to 3, wherein the fibrous carbon has an average aspect ratio of 50 or more and 100 or less.

5. An energy storage device comprising a negative electrode according to any one of claims 1 to 4.

**Patentansprüche**

1. Negative Elektrode für eine Energiespeichervorrichtung, umfassend ein negatives Substrat und eine negative Aktivmaterialschicht, die direkt oder indirekt auf mindestens eine Oberfläche des negativen Substrats aufgebracht ist,

wobei die negative Aktivmaterialschicht enthält: feste Graphitpartikel, die einen mittleren Durchmesser D1 haben; hohle Graphitpartikel, die einen größeren mittleren Durchmesser D2 als die festen Graphitpartikel haben; und ein leitfähiges Mittel, und

wobei das leitfähige Mittel faserförmiger Kohlenstoff ist.

2. Negative Elektrode nach Anspruch 1, wobei das Verhältnis zwischen dem mittleren Durchmesser D1 der festen Graphitpartikel und dem mittleren Durchmesser D2 der hohlen Graphitpartikel $1 < (D2/D1) \leq 10$ ist.

3. Negative Elektrode nach Anspruch 1 oder 2, wobei der mittlere Durchmesser D1 der festen Graphitpartikel 1 $\mu$m oder mehr und weniger als 5 $\mu$m beträgt, und

der mittlere Durchmesser D2 der hohlen Graphitpartikel 5 $\mu$m oder mehr und 20 $\mu$m oder weniger beträgt, wobei der mittlere Durchmesser nach dem in der Beschreibung beschriebenen Verfahren gemessen wird.

4. Negative Elektrode nach einem der Ansprüche 1 bis 3, wobei der faserförmige Kohlenstoff ein durchschnittliches Seitenverhältnis von 50 oder mehr und 100 oder weniger aufweist.

5. Energiespeichervorrichtung, umfassend eine negative Elektrode nach einem der Ansprüche 1 bis 4.

**Revendications**

1. Électrode négative pour un dispositif de stockage d'énergie, comprenant un substrat négatif et une couche de matériau actif négatif disposée en couche directement ou indirectement sur au moins une surface du substrat négatif,

dans laquelle la couche de matériau actif négatif contient : des particules solides de graphite qui ont un diamètre médian D1 ; des particules creuses de graphite qui ont un diamètre plus large D2 que les particules solides de graphite ; et un agent conducteur, et

dans laquelle l'agent conducteur est du carbone fibreux.

2. L'électrode négative selon la revendication 1, dans laquelle un rapport entre le diamètre médian D1 des particules solides de graphite et le diamètre médian D2 des particules creuses de graphite est $1 < (D2/D1) \leq 10$.

3. L'électrode négative selon la revendication 1 ou 2, dans laquelle le diamètre médian D1 des particules solides de graphite est de 1 $\mu$m ou plus et inférieur à 5 $\mu$m, et

le diamètre médian D2 des particules creuses de graphite est de 5 $\mu$m ou plus et de 20 $\mu$m ou moins, ledit diamètre médian étant mesuré selon la méthode décrite dans la description.

4. L'électrode négative selon l'une des revendications 1 à 2, dans laquelle le carbone fibreux présente un rapport d'aspect moyen supérieur ou égal à 50 et inférieur ou égal à 100.

5. Dispositif de stockage d'énergie comprenant une électrode négative selon l'une des revendications 1 à 4.

Fig. 1

Fig. 2

**EP 4 261 953 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017221895 A
- US 2020127289 A1
- EP 3719883 A1
- US 2017133682 A1
- US 2018190985 A1